# EUROPÄISCHE PATENTSCHRIFT

(11) **EP 4 392 699 B1**
(45) Veröffentlichungstag und Bekanntmachung des Hinweises auf die Patenterteilung: **22.07.2026**
(21) Anmeldenummer: 22768732.4
(22) Anmeldetag: 23.08.2022
(51) Int. Cl.: F16L 55/44, G01B 17/06, G01N 29/04, G01N 29/22, G01N 29/265

(54) **AUFDACHUNGSBESTIMMUNG IN ROHREN**
DETERMINATION OF PEAKING OF PIPES
DÉTERMINATION DE FORMATION DE PICS DE TUYAUX

(30) Priorität: 23.08.2021 WO PCT/EP2021/073285
(43) Veröffentlichungstag der Anmeldung: 03.07.2024
(73) Patentinhaber: NDT Global Corporate Ltd., Dublin 9, D09 A0E4 (IE)
(72) Erfinder: KOPP, Gerhard, 76133 Karlsruhe (DE); FRANK, Michael, 76689 Karlsdorf-Neuthard (DE)
(74) Vertreter: Global IP Europe Patentanwaltskanzlei
(86) Internationale Anmeldenummer: PCT/EP2022/073399
(87) Internationale Veröffentlichungsnummer: WO 2023/025762

(56) Entgegenhaltungen:
- DE-B3- 102011 109 717
- DE-T2- 3 853 323
- JP-A- 2011 058 916
- US-A1- 2019 323 828

## Beschreibung

Die vorliegende Erfindung betrifft ein Verfahren zur Aufdachungsbestimmung, einen Molch und ein Computerprogrammprodukt.

Es ist allgemein bekannt, dass insbesondere bei längs geschweißten Rohren fertigungsbedingt Unrundheiten entstehen können, sogenannte Aufdachungen, die im Bereich der Schweißnaht liegen und nachteilig sind. Diese Abweichungen von der theoretischen Rundheit können bei Druckbeanspruchung der Rohre zu verstärkter Rissbildung in und an der Schweißnaht und somit zur Undichtigkeit der Rohrleitung bzw. Pipeline führen. Es ist bekannt, dass Aufdachungen einen signifikanten Einfluss auf das Ermüdungsverhalten von Rohren haben. Dies liegt im Prinzip daran, dass sich durch eine Aufdachung eine spannungserhöhende Kerbwirkung bildet. Auch ist der Einfluss von Rissen innerhalb der Aufdachung größer, sodass ein Versagen früher eintritt. Das Zusammenfallen einer hohen Aufdachung mit einem Riss ist als kritischer Zustand zu bewerten. So werden bereits Risse mit nur 0,1 mm Risstiefe, die genügend Sicherheitsreserve haben, wenn sie außerhalb einer Aufdachung liegen, kritisch, wenn sie an Stellen hoher Aufdachung von ca. 6 mm auftreten. Sofern produktionsbedingt die Aufdachungen regelmäßig nicht vermeidbar sind, so wird gefordert, sie möglichst genau zu kennzeichnen und bei der Berechnung der Ausfallwahrscheinlichkeit entsprechend zu berücksichtigen.

Das Messen von Rissen an der Schweißnaht bei einer hohen Aufdachung ist häufig aufgrund der Geometrie nur bedingt möglich, da der Einschallwinkel stark variieren kann, beispielsweise bei einer Aufdachung von 6 mm in einer Pipeline mit 40 Zoll Durchmesser theoretisch bis zu 8,8°. Somit wird die Sicherheit von Pipelines häufig durch einen Stresstest mit Druckerhöhung ermittelt. Diese statischen oder zyklischen Tests sind nicht zerstörungsfrei, da die Rohre, die beschädigt sind, platzen. Aber auch nicht platzende Rohre werden durch den Stresstest weiter vorgeschädigt und ihre Restnutzungsdauer verkürzt sich. Um den hohen Aufwand und die Kosten dieser Stresstests zu minimieren, wird versucht, mit einem intelligenten Molch die Aufdachung zu messen. Durch Vergleichswerte weiß man, welche maximale Aufdachung noch akzeptabel ist. Für die Messung der Aufdachung kann grundsätzlich ein Ultraschallmesssensor verwendet werden, wie er für die Messung der Rohrdicke oder von Rissen regelmäßig zum Einsatz kommt. Die zusätzliche Verwendung dieses bereits benötigten Sensors auch zur Aufdachungsbestimmung ist vorteilhaft, da keine (weitere) gesonderte Messapparatur benötigt wird. Da aber übliche Ultraschallsensoren umlaufend eine Mehrzahl von Sensorträgern aufweisen, die radial nach außen gegen die Rohrinnenwand gedrückt werden, besteht die Gefahr einer Messwertverfälschung, wenn ein Sensorträger ganz oder teilweise in eine Aufdachung gedrückt wird. So kann der Sensorträger entweder ohne eine Verkippung/Verdrehung radial nach außen gedrückt werden, was das gemessene Ergebnis entsprechend reduziert oder es kann bei einem teilweisen Eintauchen des Sensorträgers in eine Aufdachung auch eine Verdrehung stattfinden und beide dieser Effekte sind gleichermaßen negativ.

Aus DE 10 2011 109 717 B3 ist ein Verfahren zur Aufdachungsmessung einer Rohrleitung mittels Ultraschall bekannt, bei der ein Sensorträger zum Einsatz kommt. Es wurde erkannt, dass der Sensorträger in eine Aufdachung zumindest teilweise eintauchen kann und so eine Vorlaufabweichung entstehen kann, die ein genaues Messen der Aufdachung erschwert. Um dieses Problem zu reduzieren, kommt diese Schrift zum Ergebnis, dass der Sensorträger mit Kufen versehen sein soll, die eine Kufenbreite aufweisen, die größer als die in Umfangsrichtung der Rohrleitung gemessene Aufdachungsbreite ist.

DE 38 53 323 T2 zeigt ein Verfahren zur Rohrkonturbestimmung mit einer Mittelwertbildung. Aus DE 10 2011 109717 B3 ist eine Ultraschall-Aufdachungsbestimmung bekannt und US 2019/323828 A1 betrifft ein weiteres Verfahren zur Geometriemessung entlang von Rohr-Schweißnähten.

Die Aufgabe der vorliegenden Erfindung ist es, ein Verfahren zum Messen und zum Berechnen einer Aufdachung bereitzustellen, welches allgemein bei Aufdachungsbestimmungen zum Einsatz kommen kann und dabei unabhängig von dem Verfahren der Erhebung der Messwerte (insbesondere von Messwerten der Rohrinnenwand) ist. Insbesondere soll weitgehend vermieden werden, dass ein Sensorträger einer gewissen Minimalbreite benötigt wird. Zudem sollen die gemessenen Daten zu einer verbesserten Bestimmung der Aufdachung nutzbar sein. Diese Aufgabe wird mit den Merkmalen der unabhängigen Ansprüche gelöst. Bevorzugte Weiterbildungen sind Gegenstand der abhängigen Ansprüche.

Bei einem Verfahren zur Aufdachungsbestimmung einer Rohrleitung werden benachbart zu einem gesuchten Punkt der Aufdachung, wo die Messung erschwert oder unmöglich ist, wie insbesondere wegen einer dort vorhandenen Schweißnaht, Messwerte der Rohrinnengeometrie aufgenommen. Die Lage der Messwerte ist also in Umfangsrichtung beabstandet vom gesuchten Punkt und aus den Messwerten wird ein Trend bestimmt und anhand des Trends wird ein Wert der Aufdachung bestimmt. Insbesondere werden Messwerte, die unmittelbar bei der Längsnaht, also bei dem Maximalwert der Aufdachung gemessen werden, bei dem Verfahren zur Berechnung der Aufdachung nicht herangezogen. Diese unmittelbare Umgebung ist mindestens so breit, wie die Schweißnahtbreite. Der genannte Trend liegt insbesondere in einer Tangentialrichtung des Rohrs an der entsprechenden Stelle. Ein wesentlicher Vorteil dabei ist, dass der gemessene/bestimmte Winkel weitestgehend unabhängig von der jeweiligen radialen Position und Winkelausrichtung (=Verdrehung) desjenigen Sensorträgers ist, welcher die Messwerte aufnimmt, bzw. die Winkellage herausgerechnet werden kann. Eine Trendbestimmung aus Messwerten kann insbesondere derart ausgeführt werden, dass zunächst grob geschätzt wird, wo eine Aufdachung vorliegen könnte und radial umlaufend zu beiden Seiten werden zumindest zwei Messwerte aufgenommen und linear derart extrapoliert, dass sich ein Schnittpunkt ergibt, der dann der Aufdachung entspricht. Alternativ zu der vorstehend genannten "groben Schätzung" können auch umlaufend um den Querschnitt eine Vielzahl von Messwerten aufgenommen werden, die dann z.B. paarweise verglichen werden, um so eine Steigung zu ermitteln und wenn die Steigungen unterschiedliche Vorzeichen haben, so kann darüber geschlossen werden, dass dazwischen eine Aufdachung vorliegt. Weitere gleichwertige Verfahren der Trendbestimmung sind dem Fachmann bekannt. Die Anzahl der Sensoren auf dem Sensorträger und insbesondere deren Abstand zueinander und der Rohrdurchmesser bestimmen die Verfahrensempfindlichkeit des vorliegenden Verfahrens.

Insbesondere kann die Entfernung von den Messpunkten, die für die Aufdachungsbestimmung herangezogen werden, zu dem gesuchten Punkt der Aufdachung größer sein, als die Entfernung von zwei benachbarten Sensoren zueinander. Bei einer gleichmäßigen Verteilung der Sensoren auf dem Sensorträger wird durch diese Formulierung ausgedrückt, dass gerade keine Messwerte verwendet werden, die benachbart zu dem gesuchten Punkt aufgenommen wurden.

Ein Grundgedanke der Erfindung besteht darin, die Höhe der Aufdachung nicht direkt über eine maximal gemessene Erhöhung direkt an der Schweißnaht zu bestimmen, sondern aus dem Aufdachungswinkel abzuleiten. An der Schweißnaht können nämlich Überstände des Schweißguts als "Schweißraupe" nach innen vorstehen. Diese Überstände sind für die Bestimmung der Aufdachung nicht von Interesse, sondern vielmehr sogar schädlich, da sie das Messergebnis verkleinern und somit verfälschen. Über das beschriebene Verfahren werden diese Überstände nicht betrachtet. Also wird zur Bestimmung des Winkels nicht direkt auf der Längsnaht gemessen werden (wo die Datenqualität erfahrungsgemäß schlecht ist), sondern es können Messungen neben der Längsnaht genutzt werden, welche in der Regel eine deutlich bessere Datenqualität aufweisen. Und schließlich ist man für die Bestimmung des Winkels nicht auf eine einzelne Messung angewiesen, sondern es können mehrere nebeneinanderliegende Messwerte rechts und links der Längsnaht verwendet werden, was die Störanfälligkeit deutlich vermindert. Für die Bestimmung des Aufdachungswinkels müssen die gemessenen Abhebungen zuerst auf die reale Rohrgeometrie projiziert werden. Danach werden anhand von Referenzpunkten links und rechts der Längsnaht die jeweiligen Steigungen bestimmt. Dies kann über beliebige Verfahren einer Mittelung, wie insbesondere eine Lineare Regression erfolgen.

Zur lagemäßigen Bestimmung der Schweißnaht werden erfindungsgemäß benachbarte Messwerte miteinander verglichen und dabei wird nach Ausreißern gesucht, die als Indiz für das Vorhandensein der Schweißnaht an dieser Stelle dienen. Alternativ oder zusätzlich wird erfindungsgemäß aufgrund von Messdaten eines oder mehrerer vorhergehenden Messungen an anderen axialen Stellen der Rohrleitung auf das Vorhandensein der Schweißnaht an einer bestimmten Stelle geschlossen. Zudem kann insbesondere ein Messwertabstand definiert werden, der zumindest der Hälfte der Schweißnahtbreite entspricht, bevorzugt aber um einen Sicherheitswert, wie mindestens um 10%, beispielsweise um 20% erhöht ist. Und Ausreißer, die erfindungsgemäß so bestimmt wurden und/oder Messwerte an Stellen der erwarteten Schweißnaht werden erfindungsgemäß für die Aufdachungsbestimmung nicht herangezogen.

Bevorzugt wird bei dem Verfahren ein Sensorträger verwendet, der eine Mehrzahl von Sensoren umfasst und der im Rohr derart angeordnet ist, dass in Rohrumfangsrichtung beiderseits des gesuchten Punkts jeweils zumindest zwei Messwerte der Entfernung von einem Sensor zur Rohrinnenwand aufgenommen werden, und dass hierüber jeweils eine Winkellage der Rohrinnenwand bestimmt wird und über einen Schnittpunkt der Winkellagen wird die Aufdachung bestimmt. Bei herkömmlichen Verfahren musste i.d.R. der Sensorträger derart breit ausgeführt sein, dass er die gesamte Breite einer zu erwartenden Aufdachung komplett überbrückte. Denn bei einem Eintauchen von zumindest einer der Kufen, die den Sensorträger gegenüber der Rohrinnenwand führt, wurden die Messwerte verfälscht. Dies führte zu dem Mehraufwand, dass die Sensorträger nicht nur mehrreihig ausgeführt werden mussten, sondern dass zudem sichergestellt werden musste, dass die Messwerte mehrreihig unterbrechungsfrei Messwerte der Rohrinnengeometrie lieferten. Aufgrund der Erkenntnis, dass es genügt, Steigungen der Messwerte, also Winkellagen von der Rohrinnenwand zu dem Sensorträger zu verwenden, können Sensorträger einer geringeren Breite verwendet werden, bzw. es können auch dann aussagekräftige Messwerte erhalten werden, wenn die wirkliche Breite der Aufdachung größer ist als eine zuvor erwartete Maximalbreite.

Das Verfahren kann alternativ oder zusätzlich auch so beschrieben werden, dass in Rohrumfangsrichtung beiderseits des gesuchten Punkts der Aufdachung jeweils zumindest zwei Punkte der Rohrinnenoberfläche bestimmt werden, die jeweils zu einer Geraden approximiert, insbesondere interpoliert, werden und deren Schnittpunkt als die Aufdachung bestimmt wird. Die Bestimmung der Lage der Punkte muss nicht in einem ortsfesten Koordinatensystem erfolgen, sondern es genügt, wenn sie relativ zu dem (oder den) Sensorträger(n) stattfindet, deren Sensoren die Punkte als die Entfernungen zu ihnen bestimmt haben. Sinnvollerweise werden die Punkte, die zur Bestimmung der Geraden verwendet werden, auf beiden Seiten der bestimmten Lage der Schweißnaht gemessen. Es werden Ausreißer, die auf die Schweißnaht hindeuten, bei der Berechnung nicht verwendet und/oder es wird auf einen hinreichenden Abstand zur bestimmten Lage der Schweißnaht geachtet. Es werden zu beiden Seiten der Schweißnaht von verschiedenen Sensoren Messpunkte aufgenommen.

In einer bevorzugten Weiterbildung des Verfahrens, werden zur Bildung des Trends in einer Mittelung wahlweise: a:) eine Mehrzahl von Messwerten über eine lineare Regression verwendet, um die Winkellage oder die Gerade zu erhalten, b:) es bestimmen jeweils benachbarte Sensoren jeweils eine Neigung der Rohrinnenwand und der Medianwert dieser Neigungen wird für die Bestimmung des Winkellage herangezogen, c:) räumlich benachbarte Sensoren bestimmen jeweils eine Neigung der Rohrinnenwand, und es wird überprüft, ob in diesen Neigungen ein Ausreißer enthalten ist und nur Neigungen werden für die Bildung eines Medianwerts herangezogen, die vom Ausreißer gesehen benachbart zum gesuchten Punkt liegen. Bei der Variante nach a:) werden die Neigungen bestimmt und verfälschte Messwerte über die lineare Mittelung in ihrer Auswirkung reduziert. Einzelne verfälschte Messwerte haben somit eine geringere Gewichtung. Und dieses Verfahren ist gemäß b:) so verbessert, dass erkannt wurde, dass bspw. Messergebnisse beim Übergang von einem Sensorträger zu dem anderen, Sprünge aufweisen können. Und über die Bildung von einzelnen Neigungen, verbunden mit ihrer Medianwertbildung können Ausreißer nicht beachtet werden. Und bei c:) wurde erkannt, dass gerade dann gute Messwerte erzielt werden, wenn lediglich Messwerte von innerhalb eines Sensorträgers betrachtet werden. Dies geschieht darüber, dass bei dem genannten "Ausreißer" ein Übergang der Sensorträger vorliegt und dann (bezogen auf den gesuchten Punkt) nur davon innenliegende Punkte berücksichtigt werden. Da die Steuerung bei der Auswertung der Messwerte über die Information verfügt, auf welchem Sensorträger die jeweiligen Sensoren sitzen, kann alternativ (oder zusätzlich) auch diese Information für die Berechnung der Aufdachung verwendet werden, so dass ggf. nur Messwerte von jeweils einem Sensorträger verwendet werden.

Vorteilhaft ist ferner, wenn für den Fall, dass die Aufdachung mit einem negativen Vorzeichen versehen ist und somit einer Einziehung entspricht, eine Spiegelung der Messwerte über die ideale Kreisbogengeometrie vorgenommen wird, nachfolgend die Berechnungen zur Ermittlung der Aufdachung durchgeführt werden, für den berechneten Wert der Aufdachung eine Spiegelung über die ideale Kreisbogengeometrie vorgenommen wird und hierüber das Maß der Einziehung, also die wirkliche Lage der negativen Aufdachung, bestimmt wird. Die Spiegelungen können bspw. über eine Kelvin-Transformation durchführt werden. Das Ausführungsbeispiel zeigt bei einer Einziehung, dass die zu berücksichtigbaren Punkte auf einer bogenförmigen Bahn liegen, die nur mit einem erhöhten Aufwand extrapoliert werden können, bzw. bei der eine entsprechende Berechnung eine Gefahr der Divergenz aufweist. Hingegen kann aufgrund einer Spiegelung eine vereinfachte lineare Regression analog zur positiven Aufdachung durchgeführt werden. Eine Spiegelung von Messwerten über eine ideale Kreisbogengeometrie kann insbesondere dergestalt vorgenommen werden, dass aufgrund von vielen umlaufenden Messwerten zunächst eine idealisierte Ist-Geometrie des Rohres definiert wird. Wahlweise können dabei Messwerte, die Ausreißer sind, wie sie z.B. bei einer Aufdachung vorliegen mit verwendet oder nicht mit verwendet werden. Diese Ist-Geometrie kann kreisbogenförmig sein, oder eine um Messpunkte interpolierte Kurve sein. Dann wird von dem Punkt, der gespiegelt werden soll, eine lotrechte (also minimale) Entfernung zu dieser idealisierten Ist-Geometrie des Rohres berechnet und das eigentliche Spiegeln geschieht dergestalt, dass der Lotvektor von dem zu spiegelnden Punkt zu dem Lotpunkt auf dem Rohr verdoppelt wird. Insbesondere wird das Verfahren für Rohrlängsnähte eingesetzt.

Weiterführend ist vorteilhaft, wenn ein Sensorträger zum Einsatz kommt, der eine Breite in Rohrumfangsrichtung aufweist, die mindestens 70%, bevorzugt mindestens 80% und besonders bevorzugt mindestens 85% einer zu erwartenden Aufdachungsbreite entspricht. Und/Oder kann der Sensorträger eine Breite aufweisen, die maximal 130% der zu erwartenden Aufdachungsbreite und insbesondere maximal 100% der zu erwartenden Aufdachungsbreite entspricht. Sehr große Breiten eines Sensorträgers können nachteilig sein, da dann, abhängig vom Rohrinnendurchmesser ggf. erhöhte Abstände von mittig innerhalb des Sensorfelds des Sensorträgers angeordneten Sensoren zur Rohrinnenwand auftreten, was sich nachteilig auf die Messwerte auswirken kann. Auch kann bei herkömmlichen Vorrichtungen gerade dann, wenn eine überaus große Aufdachung (v.a. mit großer Aufdachungsbreite in Rohrtangentialrichtung) vorliegt, die eigentlich eine besonders große Aufmerksamkeit bedürfte, ein Teil des Sensorträgers in die Aufdachung eintauchen (nämlich insbesondere eine der Kufen) und so fälschlich zu einem geringen Wert der Aufdachung führen. Aufgrund der Verwendung von den Neigungen, bzw. Winkellagen kann dieser nachteilige Effekt vermieden werden.

Ein entsprechender Molch kann eine Steuerung umfassen, bzw. damit verbunden sein, und die eingerichtet ist zur Durchführung eines der hier beschriebenen Verfahren. Der verwendete Begriff Molch umfasst insbesondere auch, dass der Molch mit elektronischen Steuermitteln versehen sein kann und in der Verbindung mit Software bedeutet dies, dass die Software in Speichern, insbesondere Permanentspeichern, der elektronischen Steuermittel aufgenommen ist.

Insbesondere kann der Molch zur Durchführung einer Wanddickenmessung und/oder einer Rissmessung in einem Rohr verwendet werden und dafür mit einem Sensorträger und einer Steuerung und/oder Software ausgerüstet sein, um eines der vorstehend beschriebenen Verfahren durchzuführen. Bei einer Wanddickenmessung ist die Messrichtung radial nach außen gerichtet, was es ermöglicht, die Messwerte unmittelbar für die genannten Berechnungen der Aufdachung heranzuziehen. Im Gegensatz dazu können bei einer Messung zur Rissdetektion die Messwinkel schräg ausgerichtet werden, so dass eine Messwertaufbereitung notwendig wird. Da diese aber durch Software durchgeführt wird, entstehen hierüber bei der Durchführung der Messungen keine Mehrkosten. Auch können die Messwerte durch beliebige andere Messverfahren wie Laserlaufzeitmessung, Triangulation oder optische Verfahren erhalten werden.

Ein entsprechendes Computerprogrammprodukt, ist in einen Programmspeicher ladbar und weist Programmbefehle auf, um alle Schritte eines der hier beschriebenen Verfahren auszuführen, wenn das Programm ausgeführt wird.

Nachfolgend werden bevorzugte Ausführungsformen anhand der Figuren beispielhaft beschrieben. Es zeigen:
- Fig. 1: einen Sensorbereich eines Teils eines Molchs,
- Fig. 2: ein zweigeteiltes Diagramm mit Modelldaten,
- Fig. 3: eine grafische Darstellung zur Erläuterung der Berechnung der Aufdachungshöhe h,
- Fig. 4: ein geteiltes Diagramm zur Darstellung der Aufdachungsberechnung bei einer negativen Aufdachung h,
- Fig. 5: eine Darstellung für die Erläuterung der Verarbeitung von Messergebnissen von Sensoren, die auf unterschiedlichen Sensorträgern liegen,
- Fig. 6: ein Detail der Fig. 5,
- Fig. 7: ein Diagramm der Messwerte gemäß Fig. 5 linksseitig von der 0 mm-Lage, also der Schweißnaht,
- Fig. 8: ein Diagramm der Messwerte rechtsseitig von der 0 mm-Lage, also der Schweißnaht der Fig. 5,
- Fig. 9: und 10 jeweils Steigungen von jeweils benachbarten Messpunkten der Fig. 7 und Fig. 8.

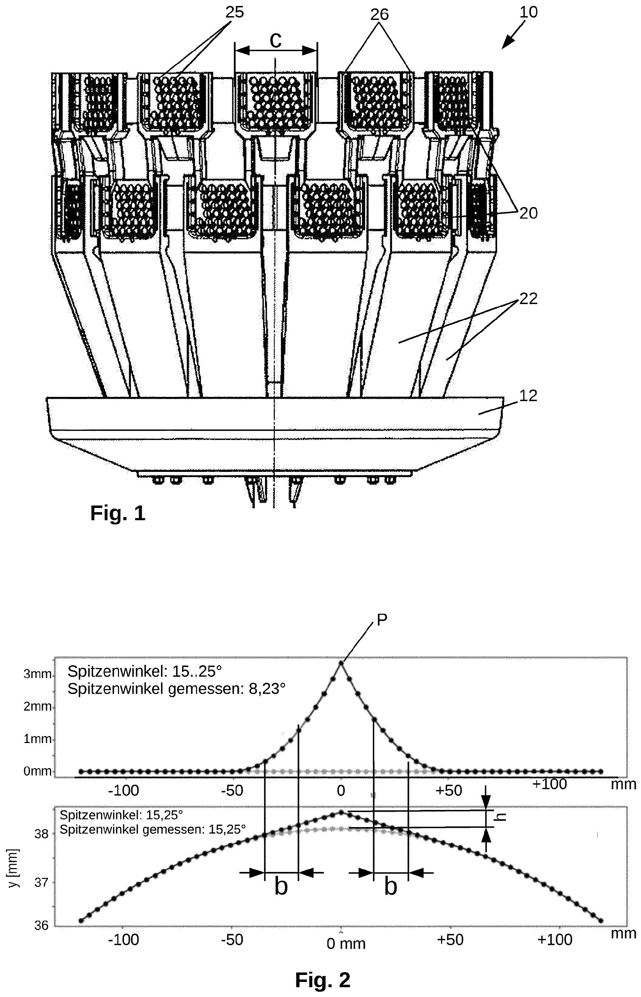

Fig. 1 zeigt einen Molch 10, für den Einsatz innerhalb von Rohren mit einem unten liegenden scheibenartigen Grundkörper 12, der um ein gewisses Maß kleiner als das zugeordnete Rohr ist und der als ein Träger für Sensorträger 20 dient. Hierzu kommen Arme 22 zum Einsatz, die jeweils mit dem einen Ende am Grundkörper 12 schwenkbar befestigt sind und das andere Ende ist jeweils mit einem Sensorträger 20 verbunden. Die Schwenkbarkeit ist dergestalt, dass die Sensorträger 20 radial nach außen beweglich sind. Hierfür kommen Federn (nicht dargestellt) zum Einsatz, die eine nach außen gerichtete Kraft erzeugen. Die Sensorträger 20 umfassen jeweils einen mittleren Bereich, in dem ein Feld von Ultraschallsensoren 25 angeordnet ist. Die Sensorträger 20 umfassen Kufen 26, zwischen denen das Feld der Ultraschallsensoren 25 angeordnet ist. Die Ultraschallsensoren sind gegenüber den Kufen zurückverlagert, also bezogen auf den Molchgrundkörper 10 nach radial innen, so dass dann, wenn der Molch 10 sich im Rohr befindet und die Sensorträger nach außen gedrückt werden, lediglich die Kufen 26, nicht aber die Ultraschallsensoren 25 in Kontakt zu dem Rohr stehen. Zusätzlich zu dieser Schwenkbarkeit, sind die Sensorträger 20 um die Längsachse des Molchs schwenkbar, so dass nach Möglichkeit beide Kufen 26 auch bei ungleichmäßiger Rohrinnenkontur an dem Rohr anliegen können, was zudem durch die genannten Federn unterstützt wird. Darüber hinaus kann optional in dem dritten der drei kartesischen rotatorischen Freiheitsgrade eine Schwenkbarkeit der Sensorträger 20 derart vorgesehen sein, dass die Kufen sich auf ihrer Länge an der Rohrinnenwand anlegen können.

Die Sensorträger 20 sind in zwei axial versetzten Reihen jeweils gleichmäßig angeordnet, wobei die Reihen in Molchumfangsrichtung einen winkelmäßigen Versatz aufweisen. Dadurch wird sichergestellt, dass die Rohrinnenseite gleichmäßig mit Sensorfeldern abgedeckt ist. Wenn die Sensoren einen Abstand in Umfangsrichtung von bspw. 4 mm aufweisen, so kann hierüber der gesamte Innenumfang des Rohrs zu jedem Messzeitpunkt an einer gegebenen axialen Lage untersucht werden. Durch eine Bewegung des Molchs in Rohraxialrichtung wird eine unterbrechungsfreie Untersuchung der gesamten Rohrinnenoberfläche ermöglicht, insbesondere mit umlaufend konstanten Messpunktabständen. Die Untersuchung kann eine Rohrdickenmessung vornehmen, bei der die Messrichtung der Sensoren radial nach außen gerichtet ist und/oder es kann eine Rissuntersuchung vorgenommen werden, und in diesem Fall sind die Sensoren bevorzugt schräg zur Rohrinnenfläche ausgerichtet. Statt der beschriebenen Konfiguration kann ein beliebiger Sensorträger zum Einsatz kommen.

Fig. 2 zeigt im oberen Teil idealisiert die Abstände von den einzelnen Sensoren 25 von der Rohrinnenseite als die sogenannten SO-Daten (SO=stand off) mit einer Aufdachung der Höhe h. Diese ist im Diagramm mittig angeordnet und kann sich insbesondere durch eine Längsschweißnaht des Rohres ergeben. Auf der horizontalen Achse sind die Abstände von der Schweißlinie in Millimetern aufgetragen. Allerdings ist es praktisch stets so, dass das Messverfahren im direkten Umfeld der Aufdachung h ungenaue und auch falsche Werte zeigt. Dies liegt u.a. daran, dass überschüssiges Schweißgut radial nach innen vorsteht und eine sogenannte Schweißraupe bildet. So kann ggf. ein Analyseschritt und Auswahlschritt der gemessenen Daten notwendig sein, um die Lage der Schweißnaht zu bestimmen. Dies geschieht bspw. durch einen Vergleich benachbarter Messwerte mit einer Suche nach Ausreißern, die als vorstehendendes Schweißgut (bzw. Schweißraupe) interpretiert werden. Und Ausreißer, die so bestimmt wurden, werden für die Aufdachungsbestimmung nicht herangezogen.

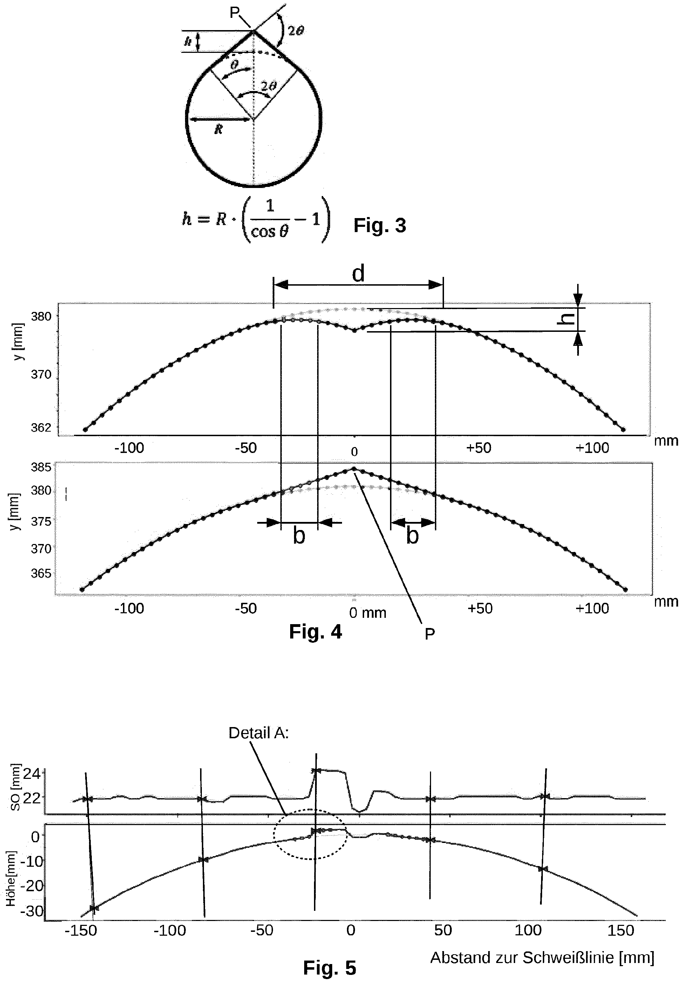

Durch dieses Material werden reduzierte Distanzen von der gemessenen Rohrgeometrie zur idealen Kreisgeometrie gemessen. Diese Werte entsprechen nicht der wahren Aufdachung h und sind für die Berechnung einer Erhöhung der Ausfallwahrscheinlichkeit nicht brauchbar. Vielmehr wird die korrekte Aufdachung h benötigt, die insbesondere als eine Aufweitung des Rohrmaterials im Bereich der Schweißnaht definiert sein kann. Zu weit von der Schweißnaht beabstandet haben die gemessenen Werte keine unmittelbare Aussagekraft für die Aufdachung h, so dass sie ebenfalls für deren Berechnung nicht herangezogen werden. So verbleiben die heranziehbaren Messwerte, welche in den in Fig. 2 in den mit "b" bezeichneten Bereichen liegen. Im unteren Teil der Fig. 2 wurden die Werte auf die Kreisgeometrie des Rohrinnendurchmessers bezogen. Dabei ergibt sich, dass die Messwerte innerhalb der Bereiche b annähernd auf einer Geraden liegen. Über eine lineare Regression lässt sich jeweils eine Steigung der Rohrwand innerhalb dieser Bereiche b bestimmen. Eine lineare Regression ist anwendbar, da vereinfachend innerhalb der Bereiche b eine konstante Steigung angenommen wird. Anhand des Zusammenhangs der Fig. 3 und der dargestellten Formel lässt sich aus dem Winkel der Steigung Θ, die Aufdachungshöhe h ermitteln. Die Bereiche b, die für die Aufdachungsbestimmung verwendet werden, können sich insbesondere unmittelbar an den Bereich anschließen, der deshalb für die Aufdachungsbestimmung nicht herangezogen wird, da in ihm die Schweißnaht erwartet wurde.

Anders ausgedrückt, ergibt sich dieser Zusammenhang auch aus dem unteren Teil der Fig. 2. Dort werden die konstanten Steigungen innerhalb der Bereiche b linear extrapoliert und es ergibt sich ein Schnittpunkt P und die Aufdachung h ist der (lotrechte) Abstand des Schnittpunkts P von den beiden Geraden bezogen zu einer idealen Kreisgeometrie der Rohrinnenseite.

Die Aufdachung h kann teilweise als das Ergebnis von einer nicht perfekten Schweißvorbereitung verstanden werden. Das Blechmaterial, aus dem das Rohr geschweißt werden soll, muss nämlich in der Schweißvorbereitung rohrförmig gebogen werden. Aufgrund von Schwierigkeiten des Eingriffs der Biegewerkzeuge bzw. der Kraftübertragung kann sich an den zu verschweißenden Kanten ggf. eine zu geringe Krümmung ergeben, die sich dann als eine Aufdachung h ausbildet. Durch die vorstehend genannte lineare Extrapolation (oder die Berechnung anhand der Fig. 3) wird angenommen, dass das Blechmaterial an der Schweißkante gar nicht gebogen ist, da ja von den Bereichen b ausgehend eine geradlinige Verlängerung zum Aufdachungspunkt P angenommen wird. So ist bei einer guten Arbeitsvorbereitung zu erwarten, dass eine so bestimmte Aufdachung h stets etwas größer sein sollte, als die sich real einstellende, da grundsätzlich zumindest eine Teil-Biegung vom Material an der Schweißkante angenommen werden kann. Dieser möglicherweise eher zu große Wert kann als ein Sicherheitsfaktor verstanden werden und macht dieses Verfahren überlegen zu anderen Verfahren, bei denen vielleicht möglichst exakt eine Aufdachung h approximiert wird, ohne aber hinreichend gut ausschließen zu können, dass die real vorhandene Aufdachung h größer als der berechnete Wert sein kann.

Aufgrund der vorstehend beschriebenen Beweglichkeit und Verdrehbarkeit der Sensorträger 20 ergibt sich, dass die mittels der Ultraschallsensoren 25 gemessenen Abstände nicht unmittelbar für die Berechnung der Aufdachung h verwendet werden können. Denn die Sensorträger 20 werden ja durch die genannten Federn nach außen gedrückt und somit ist die Relativentfernung von den Sensoren zu der Rohrinnenwand ohne eine besondere Aussagekraft. Dies gilt auch deshalb, da die Sensorträger sich schräg stellen können, wenn etwa eine der Kufen (oder beide) teilweise in die Aufdachung h abtaucht/abtauchen, und/oder die andere Kufe an einem unverformten Teil der Rohrinnengeometrie aufliegt. Das vorstehend beschriebene Verfahren mit dem ersten Schritt der Bestimmung der Steigungen hat zunächst den Vorteil, dass die Radialposition der Sensorträger 20 (also die Absolutwerte der gemessenen Entfernungen) nicht in die Berechnung der Aufdachung h eingeht, sondern nur die gemessenen Steigungen der Rohrwand auf beiden Seiten der Schweißnaht zur Berechnung des Aufdachungswinkels genutzt werden. Auch gibt es den weiteren Vorteil, dass ebenfalls eine Schrägstellung des Sensorträgers herausgerechnet werden kann, wie es nachfolgend noch erläutert wird.

In manchen Fällen kann sich eine "Aufdachung nach innen" ergeben, also eine Maßabweichung des Rohrs nach innen, wobei die Aufdachung ein negatives Vorzeichen hat, wie dies in Fig. 4 gezeigt ist. In deren oberen Teil ist zunächst in grau eine ideale Kreisgeometrie gezeigt und benachbart zu der Schweißnaht liegen punktförmig dargestellte radial nach innen verlagerte Messergebnisse. Analog zu den Überlegungen der Messwertbewertung gemäß Fig. 2, werden auch hier lediglich die Bereiche b von Messergebnissen für die Aufdachungsberechnung herangezogen. Es ist aus dem oberen Teil dieser Figur erkennbar, dass die heranziehbaren Werte auf einer bogenförmigen Bahn liegen, was es erschwert, die Werte für die Bildung eines Schnittpunkts P, der der Aufdachung h entspricht, zu extrapolieren. Eine lineare Extraplation würde systematisch zu zu niedrigen (negativen) Aufdachungshöhen führen, wobei auch erhebliche Abweichungen möglich sein können. Stattdessen wird eine Art Spiegelung an der idealen Kreisgeometrie vorgenommen und das Bild der unteren Hälfte der Fig. 4 ergibt sich dadurch. Dabei liegen die "gespiegelten" Werte weitgehend auf einer Geraden, so dass sich (wie bereits erläutert) über eine (lineare) Regression eine mittlere Steigung berechnen lässt und entsprechend auch ein Schnittpunkt P der Aufdachung h. Dieser Schnittpunkt muss aber wiederum gespiegelt werden, um so die innen liegende Aufdachung zu erhalten. Während die Spiegelung in einer vereinfachten Berechnung bspw. über einen Versatz der geloteten Abstände von der Kreisbahn berechnet werden kann, kann bevorzugt hierfür auch eine Kelvin-Transformation verwendet werden, was eine verbesserte mathematische Exaktheit verspricht, da die Kelvin-Transformation winkeltreu ist.

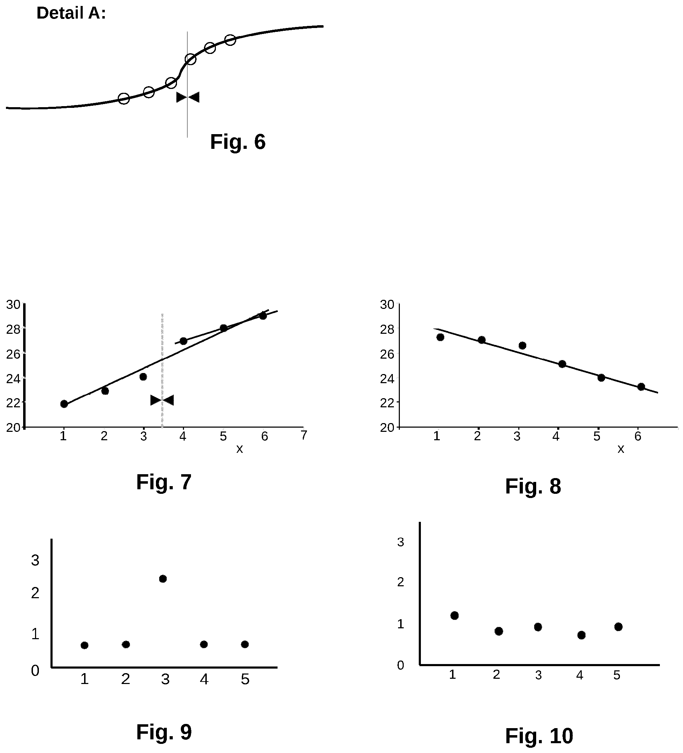

Zudem gilt auch, dass ein Versatz und/oder Winkelabweichungen von unterschiedlichen Sensorträgern 20 zueinander herausgerechnet werden kann, wie dies nachfolgend anhand der Fig. 5 und deren Detail A der Fig. 6 ersichtlich wird. Fig. 5 zeigt zunächst mehrere senkrechte Linien, zwischen denen jeweils die Sensorträger 20 liegen und die somit die Übergangslinie zweier Sensorträger 20 darstellen. Deren Messergebnisse sind in der unteren Hälfte des Diagramms als Punkte gezeigt, wobei hier aber nur die Ergebnisse eingetragen sind, die aufgrund ihrer Lage auch für die Berechnung der Aufdachung verwendet werden. Dies sind rechts von der 0 mm-Position bei der Schweißlinie sechs Punkte, die weitgehend auf einer Geraden liegen, bzw. problemlos auf diese approximiert werden können. Linksseitig von der Schweißlinie in einem Bereich von -15 mm bis -35 mm liegen sechs Messpunkte, die im Detail A der Fig. 6 vergrößert und somit besser sichtbar sind. Die rechtsseitigen Messwerte werden ausschließlich von Sensoren aufgenommen, die auf einem Sensorträger 20 liegen, so dass die lineare Regression einfach durchgeführt werden kann, wie dies in Fig. 8 gezeigt ist. Von den Messwerten linksseitig von der Aufdachung entstammen gemäß Fig. 6 die rechtsseitigen drei Messwerte ebenfalls von Sensoren dieses Sensorträgers 20, wie dies durch die vertikale Grenzlinie angedeutet ist. Die drei Messwerte links davon, stammen hingegen von Messwerten eines benachbarten Sensorträgers 20, wobei sich eine gewisse Inkonsistenz der Messwerte ergibt. Denn zwischen den Sensorträgern 20 kann ein radialer Versatz und eine veränderte Neigung bestehen. Diese Inkonsistenz kann mathematisch dadurch erkannt werden, dass die Steigung von jeweils zwei benachbarten Messpunkten bestimmt wird, wie dies in Fig. 9 gezeigt ist. Aus den sechs Messpunkten der Fig. 7 ergeben sich also die fünf Steigungen der Fig. 9. Der Wert der Steigung, der im Übergang von den Sensorträgern 20 liegt, ist deutlich höher, als die anderen und ist als ein Ausreißer zu werten. Der Ausreißer kann beispielsweise dadurch herausgerechnet werden, dass bei der Berechnung der mittleren Steigung der Medianwert der einzelnen Steigungen bestimmt wird.

Die Messwerte hingegen, die innerhalb eines Sensorträgers ermittelt werden, haben gemäß Fig. 8 praktisch keinen Ausreißer, so dass deren Steigungen gemäß Fig. 10 weitgehend identisch sind.

In einer alternativen Berechnung kann auch, wie mithilfe der Fig. 9 erläutert wurde, zunächst der Ausreißer bestimmt werden und es können für die Bestimmung der Steigung lediglich Messwerte herangezogen werden, die von demselben Sensorträger stammen, der maßgebend im Bereich der Aufdachung liegt, wie dies mit der dicken Linie der Steigung der Fig. 7 gezeigt ist, die rechtsseitig durch drei Messpunkte verläuft.

In einer alternativen Berechnung kann auch von der Steuerung berücksichtigt werden, dass jeweils nur Messergebnisse von Sensoren desselben Sensorträgers verwendet werden. Und wenn links- und rechtsseitig von der Schweißnaht, also der erwarteten Aufdachung, zumindest zwei Messwerte vorhanden sind, so kann dies bereits ausreichend sein, um hiermit die Steigungen zu berechnen. Die Verwendung von mehr Messwerten erhöht die Genauigkeit der Bestimmung der Aufdachung.

Da eine Vielzahl von Messungen mit dem Molch durchgeführt wird, der im Rohr jeweils axial verschoben wird und da die Annahme getroffen werden kann, dass die Aufdachung in Rohraxialrichtung eher konstant ist oder sich zumindest ohne Sprünge graduell ändert, können zur Bestimmung der Aufdachung auch Messwerte verwendet werden, die bei unterschiedlichen Axiallagen des Molchs gewonnen werden. Dabei können alternativ zur Bestimmung eines gemittelten Aufdachungswinkels Messwerte unterschiedlicher Axiallagen des Molchs verwendet werden. Oder es kann bei jeweils einer Axialposition des Molchs (wie beschrieben) eine Aufdachung berechnet werden, die dann mit anderen Aufdachungen bei anderen Axialpositionen des Molchs zur Bildung einer mittleren Aufdachung gemittelt werden.

In einer Ausgestaltung der Erfindung können die Sensoren gleichmäßig über den Umfang des Rohrinneren verteilt sein. Dies kann so ausgestaltet sein, dass die Sensorträger praktisch randfrei ausgeführt sind. Oder es können die Sensorträger in z.B. zwei umlaufenden Reihen ausgeführt sein, wobei die beiden Reihen axial (also in Rohrlängsrichtung) versetzt sind und die Reihen dabei tangential so verdreht sind, so dass hierüber eine gleichmäßige Abdeckung der Rohrinnenwand mit Sensoren erzielt wird. Oder in einer alternativen Ausgestaltung der Erfindung können grundsätzlich Messwerte ignoriert werden, die auf oder benachbart zu der Schweißnaht aufgenommen werden. Dies ist unschädlich, da Messwerte, die direkt auf der Schweißnaht aufgenommen werden, aufgrund der Schweißraupe keine Aussagekraft über die Aufdachung beinhalten. Selbst wenn gar keine Aufdachung im Rohr vorhanden ist, kann es passieren, dass das Verfahren trotzdem einen Aufdachungswinkel > 0° und damit eine Aufdachungshöhe > 0 mm anzeigt. Das Verfahren setzt dadurch eine Mindesthöhe der Aufdachung abhängig vom Rohrdurchmesser und der Breite der Lücke an der Längsnaht voraus. Anhand geometrischer Überlegungen können Sensitivitätskurven für das Verfahren errechnet werden, aus denen die Mindestwerte für Aufdachungswinkel und -höhe abgeleitet werden können. Im unteren Bild wurde dies beispielhaft gerechnet für ein 20" Rohr und eine Breite der Lücke von 20 mm. Das Verfahren ist in diesem Beispiel nicht sensitiv für Aufdachungswinkel im Bereich von etwa +/- 10° bzw. eine Aufdachungshöhe von etwa +/- 1 mm.

### Bezugszeichen:

- 10: Molch
- 12: Grundkörper
- 20: Sensorträger
- 22: Arm
- 25: Sensor bzw. Ultraschallsensor
- 26: Kufe
- P: gesuchter Punkt der Aufdachung
- h: Aufdachung, bzw. deren Höhe
- d: Aufdachungsbreite
- Θ: halber Aufdachungswinkel

## Patentansprüche

1. Verfahren zur Aufdachungsbestimmung einer Rohrleitung, wobei benachbart zu einem gesuchten Punkt (P) der Aufdachung (h), an dem wegen einer dort vorhandenen Schweißnaht, die Messung aussagekräftiger Messwerte erschwert oder unmöglich ist, Messwerte der Rohrinnengeometrie aufgenommen werden, und aus den Messwerten ein Trend bestimmt wird und anhand des Trends ein Wert der Aufdachung (h) bestimmt wird und
wobei benachbarte Messwerte miteinander verglichen werden und dabei nach Ausreißern gesucht wird, die als Indiz für das Vorhandensein der Schweißnaht an dieser Stelle dienen und/oder
aus Messdaten eines oder mehrerer vorhergehenden Messungen an anderen axialen Stellen der Rohrleitung auf das Vorhandensein der Schweißnaht an einer bestimmten Stelle geschlossen wird, und die so bestimmten Ausreißer und/oder Messwerte an Stellen der erwarteten Schweißnaht für die Aufdachungsbestimmung nicht herangezogen werden.

2. Verfahren gemäß Anspruch 1, wobei Messwerte, die unmittelbar bei der Schweißnaht, also insbesondere bei dem erwarteten Wert der Aufdachung (h), gemessen werden, von dem Verfahren zur Bestimmung der Aufdachung (h) nicht herangezogen werden.

3. Verfahren gemäß einem der vorangegangenen Ansprüche, wobei ein Sensorträger (20) eine Mehrzahl von Sensoren (25) umfasst, und im Rohr derart angeordnet ist, so dass in Rohrumfangsrichtung beiderseits des gesuchten Punkts (P) jeweils zumindest zwei Messwerte der Entfernung von einem Sensor (25) zur Rohrinnenwand aufgenommen werden, so dass hierüber jeweils eine Winkellage der Rohrinnenwand, insbesondere relativ zu dem Sensorträger (20), bestimmt wird und über einen Schnittpunkt der Winkellagen die Aufdachung (h) des gesuchten Punkts (P) bestimmt wird

4. Verfahren gemäß einem der vorangegangenen Ansprüche, wobei in Rohrumfangsrichtung beiderseits des gesuchten Punkts (P) der Aufdachung (h) jeweils zumindest zwei Punkte der Rohrinnenoberfläche bestimmt werden, die jeweils zu einer Geraden approximiert, insbesondere interpoliert, werden, deren Schnittpunkt der Aufdachung (h) entspricht.

5. Verfahren gemäß einem der Ansprüche 3oder 4, wobei zur Bildung des Trends wahlweise: a:) eine Mehrzahl von Messwerten über eine lineare Regression verwendet wird, um die Winkellage oder die Gerade zu erhalten, b:) jeweils benachbarte Sensoren (25) eines Sensorträgers (20) jeweils eine Neigung der Rohrinnenwand bestimmen und der Medianwert dieser Neigung für die Bestimmung der Winkellage oder Bestimmung der Geraden herangezogen wird, c:) räumlich benachbarte Sensoren (25) eines Sensorträgers (20) jeweils eine Neigung der Rohrinnenwand bestimmen, und es überprüft wird, ob in diesen Neigungen ein Ausreißer enthalten ist und nur Neigungen für die Bildung eines Mittelwerts, insbesondere eines Medianwerts, herangezogen werden, die vom Ausreißer gesehen benachbart zum gesuchten Punkt (P) liegen.

6. Verfahren gemäß einem der vorangegangenen Ansprüche, wobei für den Fall, dass die Aufdachung (h) mit einem negativen Vorzeichen versehen ist und somit einer Einziehung entspricht, eine Spiegelung der Messwerte über die ideale Kreisbogengeometrie vorgenommen wird, nachfolgend die Berechnungen zur Ermittlung der Aufdachung (h) durchgeführt werden, für den berechneten Wert der Aufdachung eine Spiegelung über die ideale Kreisbogengeometrie vorgenommen wird und hierüber das Maß der Einziehung, also die wirkliche Lage der negativen Aufdachung bestimmt wird, wobei insbesondere die Spiegelungen über eine Kelvin-Transformation durchführt werden.

7. Verfahren gemäß einem der vorangegangenen Ansprüche mit einem Sensorträger (20) mit Sensoren (25), der eine Breite (c) in Rohrumfangsrichtung aufweist, die mindestens 70%, bevorzugt mindestens 80% und besonders bevorzugt mindestens 85% einer zu erwartenden Aufdachungsbreite (d) entspricht, und/oder wobei die Breite (c) des Sensorträgers (20) maximal 130% der zu erwartenden Aufdachungsbreite (d) und insbesondere maximal 100% der zu erwartenden Aufdachungsbreite (d) entspricht.

8. Molch (10) zur Durchführung einer Wanddickenmessung und/oder einer Geometriemessung und/oder einer Rissmessung in einem Rohr, mit einem Sensorträger (20), der Sensoren (25), insbesondere Ultraschallsensoren aufweist, und einer Steuerung, die eingerichtet ist, das Verfahren nach einem der vorgenannten Ansprüche 1 bis 6 durchzuführen.

9. Computerprogrammprodukt, das in einen Programmspeicher ladbar ist und Programmbefehle aufweist, um alle Schritte eines Verfahrens nach einem der Ansprüche 1 bis 7 auszuführen, wenn das Programm durch einen Molch nach Anspruch 8 ausgeführt wird.

## Claims

1. Method for determining peaking of a pipeline, wherein measured values of the internal pipe geometry are recorded adjacent to a sought point (P) of the peaking (h), at which the measurement of meaningful measured values is difficult or impossible due to a weld seam present there, and a trend is determined from the measured values, and a value of the peaking (h) is determined on the basis of the trend, and
wherein neighbouring measured values are compared with one another and a search is made for outliers which serve as an indication of the presence of the weld seam at this location, and/or
the presence of the weld seam at a particular location is inferred from measured data from one or more previous measurements at other axial locations on the pipeline, and the outliers and/or measured values thus determined at locations of the expected weld seam are not used to determine the peaking.

2. Method according to claim 1, wherein measured values which are measured directly at the weld seam, that is to say in particular at the expected value of the peaking (h), are not used by the method for determining the peaking (h).

3. Method according to any one of the preceding claims, wherein a sensor carrier (20) comprises a plurality of sensors (25) and is arranged in the pipe in such a way that, on either side of the sought point (P) in the circumferential direction of the pipe, in each case at least two measured values of the distance from a sensor (25) to the inner wall of the pipe are recorded such that an angular position of the inner wall of the pipe, in particular relative to the sensor carrier (20), is determined in each case, and the peaking (h) of the sought point (P) is determined by way of a point of intersection of the angular positions.

4. Method according to any one of the preceding claims, wherein, on either side of the sought point (P) of the peaking (h) in the circumferential direction of the pipe, in each case at least two points on the inner surface of the pipe are determined which are each approximated, in particular interpolated, to a straight line, the point of intersection of which corresponds to the peaking (h).

5. Method according to any one of claims 3 or 4, wherein, in order to form the trend, optionally: a:) a plurality of measured values is used via a linear regression to obtain the angular position or the straight line, b:) in each case neighbouring sensors (25) on a sensor carrier (20) each determine an inclination of the inner wall of the pipe, and the median value of this inclination is used to determine the angular position or to determine the straight line, c:) spatially neighbouring sensors (25) on a sensor carrier (20) each determine an inclination of the inner wall of the pipe, and it is checked whether these inclinations contain an outlier, and only inclinations that lie adjacent to the sought point (P), as seen from the outlier, are used to form a mean value, in particular a median value.

6. Method according to any one of the preceding claims, wherein, in the event that the peaking (h) is provided with a negative sign and thus corresponds to a pulling-in, a mirroring of the measured values over the ideal circular arc geometry is carried out, thereafter the calculations for determining the peaking (h) are carried out, a mirroring over the ideal circular arc geometry is carried out for the calculated value of the peaking, and the extent of the pulling-in, that is to say the actual position of the negative peaking, is determined therefrom, wherein in particular the mirrorings are carried out by way of a Kelvin transformation.

7. Method according to any one of the preceding claims, using a sensor carrier (20) with sensors (25) which has a width (c) in the circumferential direction of the pipe that corresponds to at least 70%, preferably at least 80% and particularly preferably at least 85% of an expected peaking width (d), and/or wherein the width (c) of the sensor carrier (20) corresponds to at most 130% of the expected peaking width (d) and in particular to at most 100% of the expected peaking width (d).

8. Pig (10) for carrying out a wall thickness measurement and/or a geometry measurement and/or a crack measurement in a pipe, comprising a sensor carrier (20) which has sensors (25), in particular ultrasonic sensors, and comprising a controller which is configured to carry out the method according to any one of the preceding claims 1 to 6.

9. Computer program product, which can be loaded into a program memory and comprises program instructions to carry out all the steps of a method according to any one of claims 1 to 7 when the program is executed by a pig according to claim 8.

## Revendications

1. Procédé de détermination de la surélévation d'une canalisation, où, à proximité d'un point recherché (P) de la surélévation (h) où la présence d'un cordon de soudure rend difficile, voire impossible, la mesure de valeurs significatives, des valeurs de mesure de la géométrie intérieure de la canalisation sont enregistrées, une tendance est déterminée à partir des valeurs de mesure, et une valeur de la surélévation (h) est déterminée sur la base de ladite tendance, et
où des valeurs de mesure adjacentes sont comparées entre elles, et des valeurs aberrantes servant d'indices de présence du cordon de soudure à l'emplacement en question sont recherchées, et/ou,
à partir de données d'une ou de plusieurs mesures précédentes effectuées à d'autres emplacements axiaux de la canalisation, il est déduit que le cordon de soudure est présent à un emplacement déterminé, et les valeurs aberrantes ainsi déterminées et/ou les valeurs mesurées aux emplacements du cordon de soudure escompté ne sont pas prises en compte pour la détermination de la surélévation.

2. Procédé selon la revendication 1, où les valeurs mesurées directement au niveau du cordon de soudure, autrement dit en particulier à la valeur escomptée de la surélévation (h), ne sont pas prises en compte par le procédé de détermination de la surélévation (h).

3. Procédé selon l'une des revendications précédentes, où un support de capteurs (20) comprend une pluralité de capteurs (25) et est disposé dans la canalisation de sorte que, dans la direction circonférentielle de la canalisation de part et d'autre du point recherché (P), au moins deux valeurs de mesure de la distance entre un capteur (25) et la paroi intérieure de la canalisation sont enregistrées, si bien qu'une position angulaire de la paroi intérieure de la canalisation, en particulier par rapport au support de capteurs (20), est déterminée à partir de celles-ci, et que la surélévation (h) du point recherché (P) est déterminée à partir d'un point d'intersection des positions angulaires.

4. Procédé selon l'une des revendications précédentes, où, dans la direction circonférentielle de la canalisation, de part et d'autre du point recherché (P) de la surélévation (h), au moins deux points de la surface intérieure de la canalisation sont déterminés, lesquels sont approximés, en particulier interpolés chacun, par une droite dont le point d'intersection correspond à la surélévation (h).

5. Procédé selon la revendication 3 ou la revendication 4, où, pour la formation de tendance, sélectivement : a:) il est recouru à une pluralité de valeurs de mesure au moyen d'une régression linéaire pour obtenir la position angulaire ou la droite, b:) des capteurs (25) respectivement adjacents d'un support de capteurs (20) déterminent chacun une inclinaison de la paroi intérieure de canalisation et la valeur médiane de cette inclinaison est utilisée pour la détermination de la position angulaire ou de la droite, c) des capteurs (25) spatialement adjacents d'un support de capteurs (20) déterminent chacun une inclinaison de la paroi intérieure de la canalisation, et il est vérifié si lesdites inclinaisons comprennent une valeur aberrante, seules les inclinaisons proches du point recherché (P), par rapport à la valeur aberrante, étant utilisées pour la formation d'une valeur moyenne, en particulier d'une valeur médiane.

6. Procédé selon l'une des revendications précédentes, où, dans le cas où la surélévation (h) est affectée d'un signe négatif et correspond ainsi à un renfoncement, une réflexion des valeurs mesurées est effectuée au moyen de la géométrie d'arc de cercle idéale, les calculs pour la détermination de la surélévation (h) sont effectués ensuite, une réflexion est effectuée au moyen de la géométrie d'arc de cercle idéale pour la valeur de surélévation calculée et le degré de concavité, soit la position effective de la surélévation négative, est alors déterminé, les réflexions étant notamment effectuées au moyen d'une transformée de Kelvin.

7. Procédé selon l'une des revendications précédentes, comprenant un support de capteurs (20) pourvu de capteurs (25), présentant une largeur (c) dans la direction circonférentielle de la canalisation correspondant avantageusement à au moins 70 %, préférentiellement à au moins 80 % et tout particulièrement à au moins 85 % d'une largeur de surélévation escomptée (d), et/ou où la largeur (c) du support de capteurs (20) correspond au maximum à 130 % de la largeur de surélévation escomptée (d) et, en particulier, au maximum à 100 % de la largeur de surélévation escomptée (d).

8. Racleur (10) destiné à effectuer une mesure d'épaisseur de paroi et/ou une mesure de géométrie et/ou une mesure de fissure dans une canalisation, comprenant un support de capteurs (20) pourvu de capteurs (25), en particulier de capteurs à ultrasons, et une commande prévue pour mettre en oeuvre le procédé selon l'une des revendications 1 à 6 susmentionnées.

9. Produit de programme informatique pouvant être chargé dans une mémoire de programme et comportant des instructions de programme pour l'exécution de toutes les étapes d'un procédé selon l'une des revendications 1 à 7, lorsque le programme est exécuté par un racleur selon la revendication 8.
